# DEMANDE DE BREVET EUROPEEN

(11) **EP 1 838 017 A1**
(43) Date de publication de la demande: **26.09.2007**
(21) Numéro de dépôt: 07102996.1
(22) Date de dépôt: 23.02.2007
(51) Int. Cl.: H04B 10/20, G02B 6/44

(54) **Segment de câble pour infrastructure de communication**

(30) Priorité: 21.03.2006 FR 0650961
(71) Demandeur: SCHNEIDER ELECTRIC INDUSTRIES SAS, 92500 Rueil-Malmaison (FR)
(72) Inventeur: Perrin, Alain, 38500, Saint Nicolas De Macherin (FR); Schreiber, Sebastian, 13053, Berlin (DE); Bauer, Hannes, 44141, Dortmund (DE)
(74) Mandataire: Bié, Nicolas

(57) **Abrégé**

La présente invention concerne un segment (2) de câble et une infrastructure de communication comprenant un tel segment (2) de câble. Ce segment de câble comprend :
- plusieurs paires de fibres optiques (21),
- un connecteur d'extrémité (22a, 22b) situé à chaque extrémité du segment (2) et regroupant l'ensemble des paires (21) de fibres optiques, caractérisé en ce que
- chaque paire (21) de fibres optiques est interrompue au moins une fois pour former un point de dérivation (23) comportant deux points de connexion (24a, 24b).

## Description

La présente invention se rapporte à un segment de câble pour une infrastructure de communication comportant plusieurs paires de fibres optiques. L'invention concerne également une infrastructure de communication comportant au moins un segment de câble. L'infrastructure pourra comporter plusieurs segments connectés bout à bout.

Une infrastructure de communication informatique fonctionnant sous un protocole par exemple de type Ethernet, ATM ou Token Ring peut présenter plusieurs topologies différentes. Les topologies les plus connues sont celles en étoile, en bus ou en anneau.

Dans une topologie en étoile, des serveurs sont reliés à un concentrateur ("hub" en anglais) principal se développant par plusieurs branches en étoile vers plusieurs équipements secondaires auxquels des terminaux informatiques sont par exemple connectés directement ou par l'intermédiaire de commutateurs réseau ("switch" en anglais). Typiquement, dans une infrastructure locale, le concentrateur principal est implanté dans un local central d'un bâtiment et les équipements secondaires sont délocalisés dans des locaux situés au plus près des terminaux informatiques des utilisateurs finaux.

Les branches reliant le concentrateur principal aux équipements secondaires sont par exemple réalisées en fibres optiques. Par rapport à un câble coaxial ou à une paire torsadée, la fibre optique permet des débits bien plus élevés pouvant aller au-delà de 1 Giga Bit par seconde. En outre, elle présente de nombreux autres avantages liés notamment à l'immunité du signal le long de la fibre optique, à la fiabilité et à la sûreté de la transmission sur de longues distances.

Cependant, lorsqu'un nouvel équipement secondaire doit être installé et relié au concentrateur principal, la topologie en étoile oblige à tirer un nouveau câble en fibres optiques du concentrateur principal à l'équipement secondaire. Or, l'installation sur mesure d'un câble en fibres optiques est souvent onéreuse et doit être confiée à des spécialistes.

Une infrastructure de communication présentant une topologie en bus permet de remédier à ce problème. Dans une topologie en bus, un seul câble est connecté au concentrateur principal et ce câble présente plusieurs dérivations sur toute sa longueur, menant aux équipements secondaires. La quantité de câble à tirer entre le bus et les équipements secondaires est donc plus réduite et plus aisée à installer. Cependant, lorsque le câble est en fibres optiques et présente par exemple une paire de fibres optiques, chaque dérivation effectuée sur la paire de fibres optiques vers un équipement secondaire entraîne une atténuation du signal. De plus, actuellement, effectuer une dérivation sur un câble en fibres optiques s'avère peu pratique à mettre en oeuvre. Les documents WO 97/41476 et US 4,941,720 présentent des moyens pour réaliser une dérivation sur un câble optique. Cependant, ces documents ne décrivent pas comment construire facilement une infrastructure de communication à base de fibres optiques de bonne qualité.

Le but de l'invention est donc de pouvoir construire une infrastructure de communication à base de fibres optiques de manière simple, c'est-à-dire sans tirer de nombreux câbles et sans faire appel à des spécialistes, tout en garantissant à l'utilisateur final une qualité de service optimale.

Ce but est atteint par un segment de câble prééquipé utilisé dans une infrastructure de communication, comprenant :
- plusieurs paires de fibres optiques,
- un connecteur d'extrémité situé à chaque extrémité du segment et regroupant l'ensemble des paires de fibres optiques, caractérisé en ce que
- chaque paire de fibres optiques est interrompue une fois pour former un point de dérivation comportant deux points de connexion,
- les points de dérivation sont échelonnés le long du segment de câble.

Une infrastructure de communication construite à partir de segments selon l'invention peut être assimilée à une topologie en bus. Cette infrastructure comporte donc notamment les avantages liés à la facilité d'installation d'une infrastructure présentant une topologie en bus mais également ceux liés à la qualité du service propre à une infrastructure en topologie en étoile. L'utilisation des segments selon l'invention dans permet notamment de réaliser différents types de topologie connus, tels que des topologies en étoile ou "daisy chain".

Selon l'invention, le segment comporte plusieurs paires de fibres optiques et comporte donc plusieurs points de dérivation, par exemple échelonnés le long du segment. La construction d'une infrastructure de communication locale est donc aisée, puisqu'elle est réalisée par simple aboutement de plusieurs segments. En outre, ajouter un équipement secondaire ne présente aucune difficulté car chaque segment dispose de points de dérivation prééquipés de connecteurs. La dérivation de la fibre optique permet ainsi d'amener un signal à un fort débit au moins jusqu'à l'équipement secondaire et donc au plus près du terminal de l'utilisateur final.

Selon l'invention, l'emploi de segments du type décrit dans cette demande permet une grande modularité non seulement dans l'assemblage et l'installation d'une infrastructure de communication mais également dans le choix de la topologie mise en oeuvre.

Selon une particularité de l'invention, le segment comporte un dispositif de raccordement comportant des portions de fibres optiques aptes à relier les deux points de connexion. Ce dispositif de raccordement est connecté sur le point de dérivation lorsque le point de dérivation n'est pas employé, pour assurer la continuité de la transmission des données le long de la paire de fibres optiques.

Selon une autre particularité, à chaque point de connexion, deux fibres optiques sont réunies dans un connecteur optique.

Selon une autre particularité, au point de dérivation, la dérivation est réalisée perpendiculairement ou parallèlement aux paires de fibres optiques.

Selon un mode de réalisation particulier de l'invention, un point de dérivation est formé sur un connecteur d'extrémité.

Selon une particularité de l'invention, un connecteur d'extrémité est de type femelle et l'autre connecteur d'extrémité est de type mâle. Ceci permet de connecter bout à bout autant de segments que nécessaire.

Selon une autre particularité, les connecteurs d'extrémité sont multi-fibres par exemple de type MPO, MF ou MTP.

Selon l'invention, le segment comporte six paires de fibres optiques. Avec un point de dérivation par paire de fibres optiques, le segment comporte donc six points de dérivation, par exemple répartis sur la longueur du segment.

Selon l'invention, un tel segment est particulièrement adapté pour être implanté dans une infrastructure de communication fonctionnant sous un protocole permettant le transfert de données par fibres optiques tel que par exemple Ethernet, ATM ou "Token Ring".

Le but de l'invention est également de proposer une infrastructure de communication comportant au moins un concentrateur relié à une première extrémité d'une ligne de transmission comprenant au moins un segment de câble tel que défini ci-dessus, ledit concentrateur étant apte à envoyer des données sur chaque paire de fibres optiques de la ligne de transmission.

Selon une première variante de réalisation de cette infrastructure, la ligne de transmission présente une seconde extrémité raccordée au concentrateur par une liaison optique de retour.

Selon une deuxième variante de réalisation, la ligne de transmission présente une seconde extrémité à laquelle les paires de fibres optiques sont raccordées deux par deux par l'intermédiaire d'un connecteur.

Selon une troisième variante de réalisation, la ligne de transmission présente une seconde extrémité raccordée à un second concentrateur apte à envoyer des données sur chaque paire de fibres optiques de la ligne de transmission.

Selon une particularité de l'infrastructure, le concentrateur comporte un ou plusieurs connecteurs multi-fibres pour connecter une extrémité de la ligne de transmission.

Selon l'invention, la ligne de transmission comporte plusieurs segments connectés bout à bout ou connectés entre eux par l'intermédiaire d'un ou plusieurs câbles de transport.

Cette infrastructure de communication est particulièrement adaptée pour fonctionner sous un protocole permettant le transfert de données par fibres optiques tel que par exemple Ethernet, ATM ou "Token Ring".

D'autres caractéristiques et avantages vont apparaître dans la description détaillée qui suit en se référant à un mode de réalisation donné à titre d'exemple et représenté par les dessins annexés sur lesquels :
- la figure 1 représente de manière schématique une infrastructure de communication selon l'invention,
- la figure 2 représente un segment de câble selon l'invention comportant plusieurs paires de fibres optiques,
- la figure 3 représente de manière schématique une variante de l'infrastructure de communication selon l'invention,
- la figure 4 représente un connecteur de bouclage d'extrémité utilisable dans une infrastructure de communication selon l'invention,
- la figure 5 représente une variante du point de dérivation d'un segment selon l'invention,
- la figure 6 représente en coupe un point de dérivation d'un segment de câble selon l'invention sur lequel est connecté un câble optique,
- la figure 7 représente en coupe le point de dérivation de la figure 6 sur lequel est ajusté un dispositif de raccordement assurant la continuité de la paire de fibres optiques interrompue,
- les figures 8 et 9 représentent, vu de l'extérieur, le point de dérivation respectivement en vis-à-vis d'un câble optique ou du dispositif de raccordement.

Une infrastructure de communication informatique locale fonctionnant sous un protocole permettant le transfert de données par fibres optiques tel que par exemple Ethernet, ATM ou "Token Ring" comporte en tête un concentrateur principal 1, par exemple actif, présentant des connexions d'entrée 10 pour recevoir différentes entrées, notamment optiques, provenant de serveurs et des connexions de sortie 11 transmettant des signaux optiques, par exemple en parallèle, sur plusieurs fibres optiques d'une ligne de transmission. Les connexions de sortie 11 peuvent être par exemple des connecteurs adaptés à la connectique (MPO, SC, ST...) du concentrateur principal d'un coté et multi-fibres par exemple de type MPO (Multifibbers Push-On), MF ou MTP (marque déposée) de l'autre pour recevoir un connecteur complémentaire multi-fibres par exemple de type MPO, MF ou MTP de la ligne de transmission. Les connecteurs MTP, MF et MPO étant bien connus, ils ne sont pas décrits dans cette demande. Les connecteurs utilisés sont par exemple des connecteurs à douze fibres.

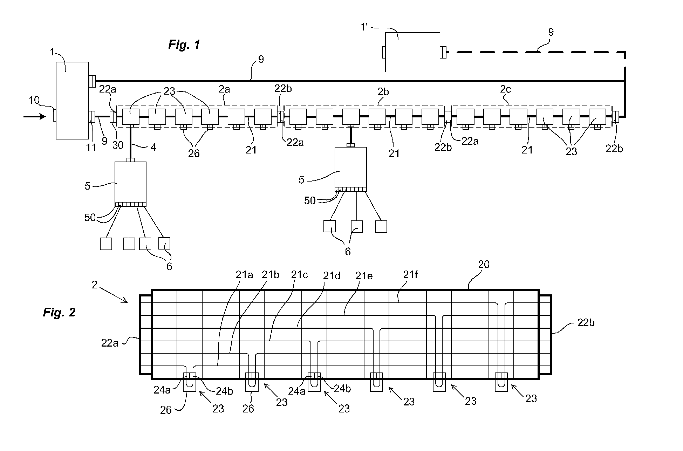

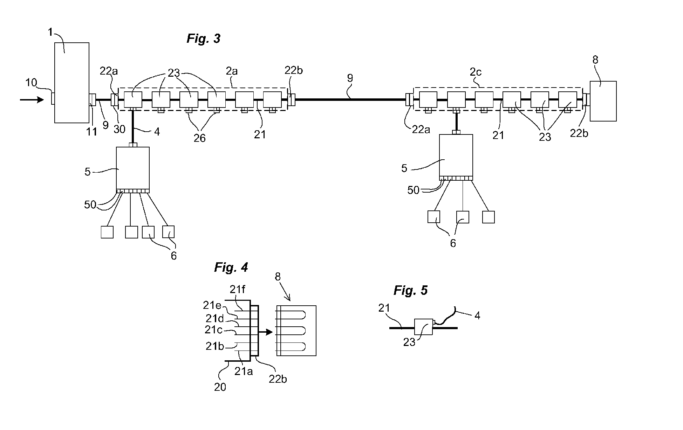

Selon l'invention, la ligne de transmission en fibres optiques est composée de plusieurs segments 2, 2a, 2b, 2c identiques en fibres optiques connectés bout à bout (figure 1) ou éventuellement séparés entre eux par un ou plusieurs câbles optiques de transport 9 (figure 3). Les fibres optiques employées sont par exemple de type OM2.

Un câble optique de transport 9 est un câble ininterrompu présentant des connecteurs multi-fibres par exemple de type MPO, MF ou MTP adaptés notamment aux connecteurs d'extrémités 22a, 22b des segments 2 et aux connexions de sortie 11 du concentrateur principal 1.

En référence à la figure 2, chaque segment 2 de câble est par exemple constitué d'un câble ou d'un conduit 20 souple, traversé suivant son axe par plusieurs paires 21a, 21b, 21c, 21d, 21 e, 21f (ci-après 21) de fibres optiques parallèles, par exemple six paires 21 de fibres optiques. Les fibres optiques sont toujours arrangées par paire, l'une des fibres optiques d'une paire étant dédiée à l'émission des données et l'autre à la réception des données. L'arrangement des paires 21 de fibres optiques dans un conduit peut notamment présenter des avantages dans le procédé de fabrication du segment 2 de l'invention.

Le câble 20 présente à chacune de ses extrémités un connecteur 22a, 22b regroupant les différentes paires 21 de fibres optiques. Ces connecteurs d'extrémité 22a, 22b sont par exemple des connecteurs multi-fibres par exemple de type MPO (pour "Multi-fibers Push On"), MF ou MTP. L'un des connecteurs d'extrémité 22a, 22b du segment 2 est par exemple un connecteur mâle et l'autre connecteur d'extrémité est un connecteur femelle. Le connecteur d'extrémité 22a situé en tête permet de connecter le segment 2a directement sur un connecteur 11 complémentaire du concentrateur principal 1 ou sur un connecteur complémentaire 30 d'un câble optique de transport 9 multi-fibres menant au concentrateur principal 1 (figure 1). Le connecteur d'extrémité opposé 22b du segment 2a est apte à recevoir le connecteur 22a complémentaire d'un segment 2b identique adjacent (figure 1) ou celui d'un câble optique de transport 9 menant par exemple à un autre segment 2c (figure 3). Si le câble 20 conduit six paires 21 de fibres optiques, les connecteurs d'extrémité 22a, 22b de chaque segment 2 ainsi que les connecteurs d'un éventuel câble optique de transport 9 entre deux segments 2 sont à douze fibres.

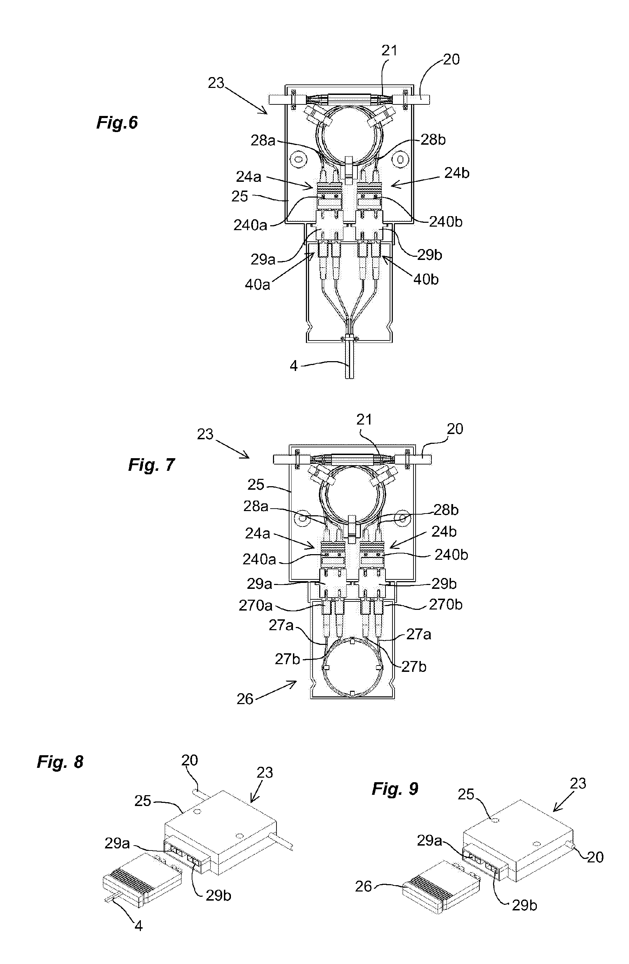

Sur chaque segment 2 de câble, chaque paire 21 de fibres optiques présente par exemple au moins un point de dérivation 23, préférentiellement un seul point de dérivation. A chaque point de dérivation 23, une paire 21 de fibres optiques est interrompue de manière à présenter quatre terminaisons optiques, deux terminaisons de la paire de fibres entrante et deux terminaisons de la paire de fibres sortante. Les deux terminaisons de la paire de fibres entrante mènent à un premier point de connexion 24a, par exemple par l'intermédiaire de deux fibres optiques de raccord 28a, et les deux terminaisons de la paire de fibres sortante mènent à un second point de connexion 24b, par exemple par l'intermédiaire de deux fibres optiques de raccord 28b (figure 6). Chacun des points 24a, 24b de connexion présente donc deux fibres optiques. Les points 24a, 24b de connexion peuvent être matérialisés chacun par un ou plusieurs connecteurs optiques distincts ou par un connecteur optique commun regroupant les deux points de connexion 24a, 24b (variante non représentée). Sur la figure 6, chaque point de connexion 24a, 24b est matérialisé par un connecteur optique 240a, 240b distinct. Les deux connecteurs optiques 240a, 240b sont réunis dans un boîtier 25 monté par exemple sur le câble 20 du segment 2 (figure 2). Si des fibres optiques de raccord 28a, 28b sont employées, elles doivent être d'une longueur suffisante pour joindre le câble 20 aux points de connexion 24a, 24b, tout en facilitant le procédé de fabrication. Si les fibres optiques de raccord sont trop longues, elles sont enroulées dans le boîtier 25 (figure 6). Un adaptateur optique 29a, 29b peut être prévu sur chaque connecteur optique 240a, 240b pour faciliter le centrage d'une connexion complémentaire (figures 8 et 9).

Selon l'invention, la dérivation de chaque paire 21 peut être orientée perpendiculairement au câble 20 (figures 1 et 3) ou parallèlement à celui-ci (figure 5) selon l'orientation des connecteurs optiques 240a, 240b dans le boîtier 25.

Un câble 4 du type jarretière optique présentant quatre fibres optiques et menant par exemple à un équipement secondaire 5 pouvant également être actif, peut ainsi être connecté à chacun des points de dérivation 23 d'un segment 2 (figures 1 et 6). Ce câble 4 présente deux connecteurs 40a, 40b complémentaires des connecteurs optiques 240a, 240b du point de dérivation 23 pour venir se raccorder sur un point de dérivation 23 d'un segment 2. L'équipement secondaire 5 connecté aux connecteurs optiques 240a et 240b, est un équipement d'une topologie de type étoile ou un équipement intermédiaire en topologie "daisy chain".

Si plusieurs segments 2 sont connectés bout à bout (figure 1) ou par l'intermédiaire d'un ou plusieurs câbles de transport 9 (figure 3), chaque paire 21 de fibres optiques se comporte donc comme un bus. Cependant, si en un point de dérivation 23, un concentrateur secondaire n'est connecté que sur un seul des connecteurs optiques 240a, 240b de la chaîne, l'équipement secondaire connecté est un équipement d'une topologie de type étoile simple ou un équipement situé à l'extrémité d'une topologie "daisy chain". Dans ce dernier cas, plusieurs équipements secondaires 5 sont connectés en des points de dérivation 23 d'une même paire 21 de fibres optiques pour former une topologie en "daisy chain", cette topologie pouvant se terminer par un équipement secondaire 5 d'extrémité connecté uniquement sur un seul des connecteurs optiques 240a, 240b d'un point de dérivation 23.

Selon l'invention, les points de dérivation les plus proches des extrémités du segment 2 peuvent éventuellement être formés directement sur chacun des connecteurs d'extrémité (variante non représentée).

Les points de dérivation 23 sont échelonnés le long du segment 2 de câble, c'est-à-dire répartis à intervalles réguliers le long de celui-ci. Chaque segment 2 comporte par exemple six paires 21 de fibres optiques. Un point de dérivation 23 étant réalisé sur chaque paire 21 de fibres, le segment comporte donc dans ce cas six points de dérivation 23 répartis sur toute sa longueur. Sur chaque segment 2, il est donc possible de connecter six équipements secondaires 5. Chaque équipement secondaire 5 comporte par exemple huit ports 50 permettant chacun de relier directement un terminal informatique 6 ou éventuellement plusieurs terminaux informatiques (non représenté).

Bien entendu, on pourrait prévoir de réaliser un nombre plus important de points de dérivation 23 sur une même paire 21 de fibres optiques et/ou de réaliser un segment 2 avec plus de six paires 21 de fibres optiques.

Si un point de dérivation 23 n'est pas connecté, un dispositif de raccordement entre les deux points de connexion 24a, 24b est employé pour assurer la continuité de la paire 21 de fibres optiques (figures 7 et 9). Ce dispositif de raccordement se présente par exemple sous la forme d'un capuchon 26 éventuellement solidaire du boîtier 25 du point de dérivation 23. Ce capuchon 26 intègre deux portions 27a, 27b de fibres optiques présentant quatre terminaisons réunies par paire dans deux connecteurs optiques 270a, 270b. Chacune des portions 27a, 27b est apte à effectuer la jonction entre les deux points 24a, 24b de connexion du point de dérivation 23 lorsque ce point de dérivation n'est pas employé, en connectant chacun des connecteurs optiques 270a, 270b du capuchon 26 dans un connecteur 240a, 240b correspondant du point de dérivation 23. Si les deux portions de fibres 27a, 27b sont trop longues dans le capuchon, elles peuvent être enroulées à l'intérieur du capuchon 26. En référence aux figures 1 à 3, un dispositif de raccordement selon l'invention est inséré à chaque point de dérivation 23 non raccordé à un équipement secondaire 5 pour assurer la continuité de la transmission des données le long de la paire 21 de fibres optiques.

Sur la figure 1, les segments 2 sont connectés bout à bout par l'intermédiaire de leurs connecteurs d'extrémité 22a, 22b complémentaires. La ligne de transmission comporte donc par exemple trois segments 2a, 2b, 2c connectés bout à bout. Ce nombre n'est pas limitatif même si en réalité, selon le nombre de dérivations effectuées sur chaque segment 2, il faudra veiller à conserver un signal suffisamment fort en bout de ligne de transmission. Comme représenté en figure 3, il est également possible de prévoir de raccorder deux segments 2a, 2c par l'intermédiaire d'au moins un câble optique de transport 9 présentant des connecteurs multi-fibres par exemple de type MPO, MF ou MTP pour se connecter sur chacun des segments 2a, 2c.

Selon l'invention, l'emploi des segments 2 permet une grande modularité non seulement dans l'assemblage et l'installation d'une infrastructure de communication mais également dans le choix de la topologie de cette infrastructure.

Une infrastructure de communication incluant un ou plusieurs segments 2 selon l'invention peut être réalisée selon les variantes suivantes :
Selon une première variante de réalisation, le concentrateur est connecté à la ligne de transmission et envoie des signaux sur les paires 21 de fibres optiques de la ligne. Selon cette configuration, aucun rebouclage des signaux n'est effectué. Ainsi si le signal présent sur une fibre d'émission d'une paire 21 est coupé (coupure de la fibre ou perte d'un équipement secondaire), tous les terminaux situés sur cette fibre, en aval du point de coupure, ne reçoivent plus aucun signal.
Selon une deuxième variante de réalisation représentée en figures 3 et 4, il est possible de prévoir à l'extrémité de la ligne de transmission un connecteur 8 de bouclage permettant de relier les paires 21 de fibres optiques entre elles. Le schéma d'un tel connecteur est représenté en figure 4. Sur cette figure 4, les paires 21 a, 21 b, 21 c, 21 d, 21 e, 21f de fibres optiques sont raccordables entre elles deux par deux par l'intermédiaire du connecteur 8 de bouclage. Ainsi, par exemple, même si le signal est coupé sur une fibre d'une paire 21 (coupure de la fibre ou perte d'un équipement secondaire), le signal peut tout de même atteindre les terminaux 6 situés en aval du point de coupure en passant par la paire de fibres située en parallèle.
Selon une troisième variante de réalisation, la ligne de transmission peut être rebouclée à l'aide d'un câble optique multi-fibres de transport 9 connecté sur le connecteur d'extrémité 22b du segment de queue 2c pour relier la ligne de transmission au concentrateur principal 1 (figure 1). Ainsi le concentrateur principal dispose de deux chemins possibles pour envoyer les signaux, par exemple en parallèle, sur les fibres optiques de la ligne de transmission.
Selon une quatrième variante de réalisation de l'invention (9 en pointillés sur la figure 1), la ligne de transmission constituée par exemple de l'assemblage des segments 2a, 2b, 2c peut être reliée à chaque extrémité à un concentrateur principal 1, 1' différent. Dans ce cas, chacun des concentrateurs principaux 1, 1' est connecté aux serveurs centraux et peut recevoir des données de ces serveurs pour les transmettre, par exemple en parallèle, sur les paires de fibres de la ligne de transmission. Dans cette variante, le câble 9 optique (figure 1) de retour en trait plein n'est plus nécessaire.

Selon l'invention, différents procédés de fabrication peuvent être envisagés pour la réalisation d'un segment 2 de câble prééquipé selon l'invention. Un procédé peut consister à sectionner toutes les paires 21 de fibres optiques, à effectuer la dérivation sur la paire concernée puis à ressouder les autres paires 21 par exemple par fusion. Un autre procédé peut consister à réunir les paires 21 de fibres dans un conduit et d'effectuer la dérivation sur une seule des paires en tirant sur celle-ci sans sectionner les autres paires. Un autre procédé peut consister à se saisir de la paire 21 de fibres à dériver, à la chauffer en vue d'étirer les deux fibres pour pouvoir effectuer la dérivation.

Il est bien entendu que l'on peut, sans sortir du cadre de l'invention, imaginer d'autres variantes et perfectionnements de détail et de même envisager l'emploi de moyens équivalents.

## Revendications

1. Segment (2) de câble prééquipé utilisé dans une infrastructure de communication, comprenant :
- plusieurs paires de fibres optiques (21),
- un connecteur d'extrémité (22a, 22b) situé à chaque extrémité du segment (2) et regroupant l'ensemble des paires (21) de fibres optiques, **caractérisé en ce que**
- chaque paire (21) de fibres optiques est interrompue une fois pour former un point de dérivation (23) comportant deux points de connexion (24a, 24b),
- les points de dérivation (23) sont échelonnés le long du segment (2) de câble.

2. Segment selon la revendication 1, **caractérisé en ce qu'**il comporte un dispositif de raccordement (26) comportant des portions de fibres optiques (27a, 27b) aptes à relier les deux points de connexion (24a, 24b).

3. Segment selon la revendication 1 ou 2, **caractérisé en ce que**, à chaque point de connexion (24a, 24b), deux fibres optiques sont réunies dans un connecteur optique (240a, 240b).

4. Segment selon l'une des revendications 1 à 3, **caractérisé en ce que**, au point de dérivation (23), la dérivation est réalisée perpendiculairement ou parallèlement aux paires (21) de fibres optiques.

5. Segment selon l'une des revendications 1 à 4, **caractérisé en ce qu'**un point de dérivation (23) est formé sur un connecteur d'extrémité (22a, 22b).

6. Segment selon l'une des revendications 1 à 5, **caractérisé en ce qu'**un connecteur d'extrémité (22b) est de type femelle et l'autre connecteur d'extrémité (22a) est de type mâle.

7. Segment selon l'une des revendications 1 à 6, **caractérisé en ce que** les connecteurs d'extrémité (22a, 22b) sont multi-fibres.

8. Segment selon l'une des revendications 1 à 7, **caractérisé en ce qu'**il comporte six paires (21 a, 21 b, 21 c, 21 d, 21 e, 21f) de fibres optiques.

9. Segment selon l'une des revendications 1 à 8, **caractérisé en ce que** l'infrastructure de communication fonctionne sous le protocole Ethernet.

10. Infrastructure de communication, **caractérisée en ce qu'**elle comporte au moins un concentrateur (1) relié à une première extrémité d'une ligne de transmission comprenant au moins un segment (2) de câble selon l'une des revendications 1 à 9, ledit concentrateur étant apte à envoyer des données sur chaque paire (21) de fibres optiques de la ligne de transmission.

11. Infrastructure selon la revendication 10, **caractérisée en ce que** la ligne de transmission présente une seconde extrémité raccordée au concentrateur (1) par une liaison optique de retour (9).

12. Infrastructure selon la revendication 10, **caractérisée en ce que** la ligne de transmission présente une seconde extrémité raccordée à un second concentrateur (1') apte à envoyer des données sur chaque paire (21) de fibres optiques de la ligne de transmission.

13. Infrastructure selon la revendication 10, **caractérisée en ce que** la ligne de transmission présente une seconde extrémité à laquelle les paires (21) de fibres sont raccordées deux par deux par l'intermédiaire d'un connecteur (8).

14. Infrastructure selon l'une des revendications 10 à 13, **caractérisée en ce que** le concentrateur (1, 1') comporte un connecteur multi-fibres (11) pour connecter une extrémité de la ligne de transmission.

15. Infrastructure selon l'une des revendications 10 à 14, **caractérisée en ce que** la ligne de transmission comporte plusieurs segments (2a, 2b, 2c) connectés bout à bout ou connectés entre eux par l'intermédiaire d'un ou plusieurs câbles de transport (9).

16. Infrastructure selon l'une des revendications 10 à 15, **caractérisée en ce qu'**elle fonctionne sous le protocole Ethernet.
